# EUROPÄISCHE PATENTANMELDUNG

(11) **EP 1 002 984 A2**
(43) Veröffentlichungstag der Anmeldung: **24.05.2000**
(21) Anmeldenummer: 99122656.4
(22) Anmeldetag: 15.11.1999
(51) Int. Cl.: F16L 55/045, E03C 1/04

(54) **Druckschlag- und Geräuschdämpfer für Wasserleitung und -armaturen**

(30) Priorität: 21.11.1998 DE 19853768
(71) Anmelder: Frey, Conrad, 8008 Zürich (CH)
(72) Erfinder:
(74) Vertreter: Wolff, Michael, Dipl.-Phys.

(57) **Zusammenfassung**

Um bei einem Druckschlag- und Geräusch-**Dämpfer** für Wasserleitungen und -armaturen insbesondere sanitärer Installationen sowohl Druckschläge als auch Fließ- und Kavitationsgeräusche erheblich besser zu dämpfen, wird für Dämpfer mit elastischem Schlauchstück (siehe z.B. DE-PS 689.184) vorgeschlagen, zwischen Gehäuse (1) und Schlauchstück (2) ein afluides Dämpfungselement (Elastomer 7) wasserdicht einzubauen, welches mit dem Schlauchstück (2) eine Hintereinanderschaltung von zwei Federn bildet, deren Kennlinien zweckmäßig aufeinander abgestimmt sind (Fig. 1).

## Beschreibung

Die Erfindung betrifft einen Druckschlag- und Geräusch-dämpfer für Wasserleitungen und -armaturen insbesondere sanitärer Installationen, gemäß Oberbegriff des Anspruches 1.
Bei einem derartigen, aus der DE-PS 689.184 bekannten "geräuschdämpfenden Rohrzwischenstück" ist ein Gummirohrstück (2) als Schlauchstück mittels einer koaxialen Metallhülse (5) als Gehäuse axial und radial eingefasst, wobei der mittlere Abschnitt des Gummirohrstückes (2) radial außen einen Luftraum mit der Metallhülse (5) bilden kann.

Nachteilig wäre hieran, daß die Kombination der Federkennlinien des Gummirohrstückes (Elastomer) bzw. des Luftraumes (Gas) stark verschieden sind und keine homogene Dämpfereinheit mit hervorragenden Eigenschaften entstehen lassen.
Der Erfindung liegt daher die Aufgabe zugrunde, unter Beseitigung des zuvor genannten Nachteils des bekannten Dämpfers einen gleichartigen Dämpfer zu schaffen, welcher sowohl den beim schnellen Beenden des Wasserdurchflusses entstehenden Druckschlag als auch die beim Wasserfluss auftretenden Kavitations- und Fließgeräusche erheblich vermindert.
Diese Aufgabe ist erfindungsgemäß durch den Dämpfer gemäß Anspruch 1 gelöst, dessen weder ganz gasförmiges noch flüssiges, afluides Dämpfungselement z.B. aus einem Granulat elastischer Rundkörner bestehen könnte, die kleine Luftzwischenräume bilden. Auch eine solche Ausführung entspräche Anspruch 2. - Bevorzugt wird aber ein Dämpfer gemäß Anspruch 3.
Die Verschlußbuchse gemäß Anspruch 4 erlaubt vor ihrer Einfügung und der anschließenden Festklemmung des Schlauchstückes das Einbringen des Dämpfungselementes durch die erweiterte öffnung des Gehäuseendes.
Während in erster Linie an einen durchflossenen Dämpfer gedacht ist, kann der erfindungsgemäße Dämpfer aber auch gemäß Anspruch 5 eine statische Sackgasse für die Wasserströmung darstellen, wobei beide Dämpferarten gemeinsam zum Einsatz kommen können.

Gegenstand der Erfindung sind auch die Verwendungen erfindungsgemäßer Dämpfer gemäß Anspruch 6 bzw. 7.

Im Folgenden ist die Erfindung anhand dreier durch die anliegende Zeichnung beispielhaft dargestellter Ausführungsformen des erfindungsgemäßen Dämpfers im Einzelnen erläutert.
Es zeigt:
- Fig. 1: einen Längsschnitt durch eine erste Ausführungsform in Verbindung mit einer Wasserleitung
- Fig. 2: rechts und links je einen Längsschnitt durch eine zweite bzw. dritte Ausführungsform in Verbindung mit einer Wasserarmatur

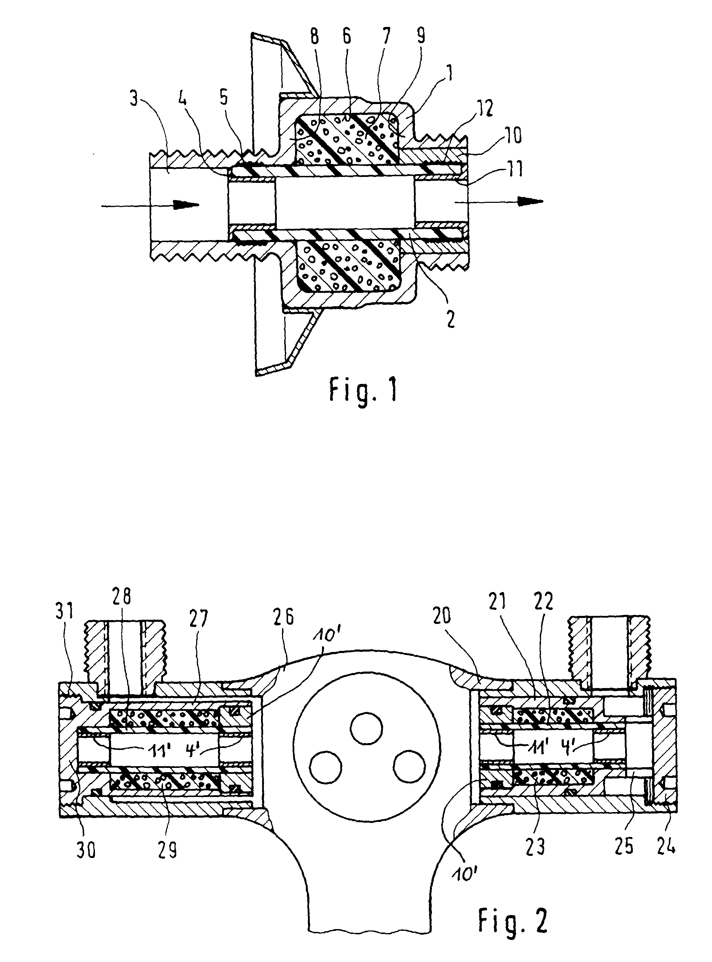

Fig. 1 zeigt einen Längsschnitt durch ein z.B. als Anschlußnippel einer Sanitärarmatur ausgebildetes, mittig erweitertes Gehäuse 1. Koaxial im Zentrum ist ein elastisches Schlauchstück 2 eingesetzt. Das Schlauchstück 2 ist stromaufwärts in einer Gehäuse-Bohrung 3 mit Hilfe einer Klemmhülse 4 und Dichtrillen 5 im Gehäuse 1 festgeklemmt. Zwischen dem Außendurchmesser des elastischen Schlauchstückes 2 und dem erweiterten Innendurchmesser 6 des Gehäuses 1 ist ein Dämpfungselement 7 eingebaut. Dieses Dämpfungselement 7 besteht aus einem Elastomer mit geschlossenen Poren oder aus einem Granulat. Der ganze Hohlraum des erweiterten Mittelabschnittes des Gehäuses 1 ist mit dem Elastomer ausgefüllt. Das Elastomer stützt sich außen am Innendurchmesser 6 und seitlich an zwei radialen Stirnflächen 8 und 9 des Gehäuses ab. Stromabwärts ist im Gehäuse 1 eine Buchse 10 dicht und fest eingesetzt. Diese Buchse 10 wird erst eingesetzt, nachdem das Dämpfungselement 7 montiert ist. Am Schluß der Montage wird das Ende des Schlauchstückes 2 auf der Seite stromabwärts mit Hilfe einer Klemmhülse 11 und Dichtrillen 12, die sich in der Bohrung der Buchse 10 befinden, festgeklemmt.
Tritt ein Druckschlag in der Leitung auf, z.B. infolge schnellen Schließens einer Armatur, dann weitet sich das elastische Schlauchstück 2 etwas auf und der Druckschlag wird absorbiert. Das Maß der Aufweitung ist abhängig von der Federkennlinie der Kombination Dämpfungselement 7/ elastisches Schlauchstück 2 und natürlich von der Höhe des Druckschlages.
Die Federkennlinie kann beeinflußt werden durch die Elastizität des Schlauchstückes 2 und die Elastizität des Dämpfungselementes 7. Letztere wird bestimmt durch das Volumen des Dämpfungselementes 7, durch die Eigen-Elastizität des Elastomers und durch die Anzahl und Größe der im Elastomer eingeschlossenen Poren.
Durch richtige Kombination aller obigen Werte können optimale Druckschlag-Dämpfungen erreicht werden.
Messungen haben gezeigt, daß die beim raschen Schließen von Armaturen üblichen Druckschlagspitzen von gegen 30 bar mittels des Dämpfungselementes 7 bis auf unter 10 bar reduziert werden können.
Bei richtiger Kombination obiger Parameter werden aber auch übliche Kavitationsgeräusche und Fließgeräusche erheblich reduziert.

Fig. 2 zeigt rechts einen Längs-Teilschnitt durch eine Sanitärarmatur 20. Im Gehäuse 21 sind, ähnlich wie in Fig. 1, ein elastisches Schlauchstück 22 und ein Dämpfungselement 23 eingebaut. Das Gehäuse 21 ist fest mit einem Verschlußdeckel 24 verbunden und es weist einige Schlitze 25 auf, durch die das zufließende Wasser radial ins Zentrum und durch das Schlauchstück 22 zum Mischer fließt. Die Wirkungsweise des Dämpfungselementes 23 ist gleich der bei Fig. 1. Der Einbau des Dämpfungselementes in die Armatur hat den Vorteil, daß als Anschlußnippel übliche Standard-Teile verwendet werden können.

Fig. 2 zeigt links einen Längs-Teilschnitt durch eine andere Sanitärarmatur 26. Im Gehäuse 27 sind wiederum ein elastisches Schlauchstück 28 und ein Dämpfungselement 29 eingebaut. Der Verschlußdeckel 30 ist fest mit dem Gehäuse 27 verbunden und mit einem Gewinde 31 in der Sanitärarmatur 26 befestigt.
In diesem Fall wird das zufließende Wasser nicht durch die zentrale Bohrung des Schlauchstückes 28 geleitet. Die innere Wandung desselben wird jedoch durch Druckschläge (im Falle von schnellem Schließen von Armaturen) und durch hochfrequente Schwingungen (im Falle von Kavitationsgeräuschen) beaufschlagt.

Die Sanitärarmaturen 20 und 26 weisen wie der Anschlussnippel gemäß Figur 1 je zwei Klemm-Hülsen 4' und 11' sowie eine Verschluss-Buchse 10' auf.
Bei der Armatur 20 bilden die Hülse 11' radial innen, das benachbarte Ende des Schlauchstückes 22 mittig und die Buchse 10' radial außen eine koaxiale Anordnung. Gleiches gilt für die Hülse 4', die Buchse 10' und das von beiden eingeklemmte Ende des Schlauchstückes 28.

## Patentansprüche

1. Druckschlag- und Geräusch-**Dämpfer** für Wasserleitungen und -armaturen, mit einem gegebenenfalls fließendes Wasser führenden, elastischen Schlauchstück, das von einem starren Gehäuse umgeben ist, in dem die beiden Enden des Schlauchstückes mittels zweier gegebenenfalls konischer Hülsen radial eingeklemmt sind, dadurch **gekennzeichnet**, daß zwischen Gehäuse (1) und Schlauchstück (2) ein afluides Dämpfungselement (7) wasserdicht eingebaut ist, welches mit dem Schlauchstück (2) eine Hintereinanderschaltung von zwei Federn bildet, deren Kennlinien gegebenenfalls aufeinander abgestimmt sind.

2. Dämpfer nach Anspruch 1, dadurch gekennzeichnet, daß das Dämpfungselement (7) den vom Gehäuse (1) und Schlauchstück (2) gebildeten Hohlraum (6, 8, 9) vollständig ausfüllt.

3. Dämpfer nach Anspruch 1 oder 2, dadurch gekennzeichnet, daß das Dämpfungselement (7) aus einem Elastomer besteht, das geschlossene Poren aufweist.

4. Dämpfer nach einem der Ansprüche 1 bis 3, dadurch gekennzeichnet, daß am einen Ende des Gehäuses (1) radial zwischen diesem einerseits und dem Schlauchstück (2) sowie der koaxialen Klemmhülse (11) andererseits eine VerschlußBuchse (10) eingefügt ist.

5. Dämpfer nach einem der Ansprüche 1 bis 4, dadurch gekennzeichnet, daß das Schlauchstück (28) an einem seiner beiden Enden vom Gehäuse (27, Deckel 30) wasserdicht verschlossen ist.

6. Verwendung eines Dämpfers nach einem der Ansprüche 1 bis 4 als Nippel in der Zuleitung einer sanitären Armatur.

7. Verwendung eines Dämpfers nach einem der Ansprüche 1 bis 5 als Bestandteil einer sanitären Armatur.
